# EUROPEAN PATENT SPECIFICATION

(11) **EP 3 097 785 B1**
(45) Date of publication and mention of the grant of the patent: **28.02.2018**
(21) Application number: 15380019.8
(22) Date of filing: 26.05.2015
(51) Int. Cl.: A23C 3/033, A23L 2/46

(54) **PROCESS FOR THE CONTINUOUS STERILIZATION OF A LIQUID PRODUCT**
VERFAHREN ZUR KONTINUIERLICHEN STERILISATION EINES FLÜSSIGEN PRODUKTS
PROCEDE DE STERILISATION EN CONTINU D'UN PRODUIT LIQUIDE

(43) Date of publication of application: 30.11.2016
(73) Proprietor: Liquats Vegetals SA, Girona (ES)
(72) Inventor: Erra Serrabasa, Josep M., 17430 Santa Coloma de Farners (Girona) (ES)
(74) Representative: Juncosa Miro, Jaime

(56) References cited:
- WO-A2-02/37975
- DE-U1- 29 710 507
- US-A- 4 610 298
- US-A1- 2005 112 258

## Description

### Field of the Art

The present invention relates to the field of methods for sterilizing liquid products, particularly food liquid products, that need to be kept for a long time, by means of a continuous treatment, which comprises increasing and maintaining the temperature of the liquid product above a threshold for a time sufficient to assure complete sterilization, and subsequent cooling of the liquid product preventing the change of its organoleptic properties, the method being particularly envisaged for the treatment of dairy products and beverages made from plant-based foods.

### State of the Art

Different methods for treating drinkable liquid food products for sterilization thereof by means of heating and subsequently cooling the liquid product, such as for example, pasteurization or UHT (ultra high temperature) method, that differ in the temperature reached and the heating and cooling times, are known.

Patent document US4610298 discloses a process whereby a liquid product, preferably milk, is preheated in several steps, subsequently subjected to a sterilization treatment by means of rapid heating to temperatures greater than 130°C, and finally subjected to subsequent cooling, first using the hot treated liquid product to cause said preheating of the incoming liquid product, by means of at least one heat exchanger putting the liquid product to be treated in thermal contact with the already treated liquid product, thereby recovering part of the heat supplied to said liquid product during sterilization treatment thereof, and subsequently causing an additional cooling of the treated liquid product by means of passage thereof through a heat exchanger putting it in thermal contact with water at room temperature.

Patent documents US20050112257 and US20050112258 also describe a similar method whereby, however, said additional cooling is carried out by putting the treated liquid product in thermal contact with cooled water, preferably cooled water with glycol.

Patent documents DE29710507U and WO0237975 describe a method wherein the heat exchange is produced through an intermediate closed loop heat exchanger.

Any of the cited documents allow the reduction of the sterilized liquid product temperature below an average temperature between the coldest and the hottest liquid product temperature without the use of an energy consuming cooling unit.

Although these methods recover part of the heat applied to the liquid product during sterilization, carrying out the methods still requires a lot of energy and water particularly due to the indispensable need of resorting to cooled water supply.

### Brief Description of the Invention

The present invention relates to a method for continuously sterilizing a liquid food product which will be preferably, but in a non-limiting manner, a dairy product, such as for example, milk or a beverage made from plant-based foods, the most common beverages being beverages containing grains such as oats, rice, and beverages containing soy as an example of legumes, and beverages containing dried fruits and/or nuts.

The main objective of the present invention is to achieve energy savings in a treatment plant particularly through greater recovery and reuse of the energy used in liquid product sterilization, achieving lower plant operation costs, without it having any impact on the quality of the treated liquid product.

The proposed method therefore comprises the following steps:
a) extracting said liquid product from a storage tank at a first temperature and supplying same under pressure through a supply conduit;
b) preheating said liquid product in a preheating area by means of at least one preheating heat exchanger in contact with a liquid at a second temperature greater than said first temperature;
c) sterilizing said preheated liquid product reaching a sterilization temperature and maintaining same for a predetermined holding time;
d) cooling the sterilized liquid product in a discharge conduit by means of passage thereof through the mentioned at least one preheating heat exchanger and by passage through a first cooling heat exchanger in thermal contact with water at room temperature and the subsequent passage thereof through a second cooling heat exchanger in thermal contact with water cooled below room temperature.

The proposed method therefore includes preheating the incoming liquid product to be sterilized before sterilizing heat treatment by means of passage thereof through at least one preheating heat exchanger where part of the heat transported by the liquid product after sterilization is used to cause said preheating of the incoming liquid product, while achieving at the same time partial cooling of the already sterilized liquid product by means of the heat exchange.

The sterilizing heat treatment includes rapidly increasing the temperature of the liquid product to cause the death of any microorganism it may contain.

After sterilization and partial cooling of the already sterilized liquid product by means of passage thereof through the mentioned at least one preheating heat exchanger, said sterilized liquid product is successively cooled by means of passage thereof through a first cooling heat exchanger, where it is put in contact with water at room temperature, and by successive passage through a second cooling heat exchanger, where it is put in thermal contact with water cooled below room temperature.

By means of the first cooling heat exchanger putting the already sterilized liquid product in thermal contact with water at room temperature, it is not possible to reduce the temperature of said liquid product below said room temperature, so an additional cooling by other means is required. The second cooling heat exchanger is costly energy-wise as it requires putting the already sterilized liquid product in thermal contact with a liquid cooled below room temperature, preferably glycolated water generated in a cooling unit.

This method allows recovering part of the heat applied to the liquid product during sterilization treatment thereof, but an additional and onerous supply of energy and water still being necessary to complete the cooling of the liquid product.

For that reason, it is proposed for the method to furthermore include, during said step of cooling, cooling the sterilized liquid product by means of a third cooling heat exchanger intercalated between said first and second cooling heat exchangers, a heat exchange between the liquid product to be sterilized freshly extracted from said storage tank and the discharged sterilized product being performed in said third cooling heat exchanger. Said heat exchange can be direct or indirect.

The position of said third heat exchanger placed between the first and second cooling heat exchangers allows the third cooling heat exchanger to be able to reduce the temperature of the already sterilized liquid product below room temperature without any energy cost, furthermore achieving the recovery and reuse of part of the already used energy, such that the cooling task that must be carried out by the second cooling heat exchanger by means of injecting energy used for cooling same is less or non-existent and therefore less costly, or even unnecessary.

Furthermore, the first heat exchanger in which the incoming liquid product to be sterilized starts to be heated puts said liquid product in contact with the already sterilized liquid product which has already been cooled considerably to a temperature close to room temperature, after passing through the preheating heat exchanger/exchangers and through the first cooling heat exchanger. As a result, the first heating of the liquid product to be sterilized is not sudden, nor does it cause said liquid product to reach high temperatures which could damage its organoleptic properties or taste, which is what might happen if said third heat exchanger were placed before the already sterilized liquid product passes through the first cooling heat exchanger, and therefore being able to increase the temperature of the liquid product to be sterilized above room temperature.

In contrast, if said third heat exchanger proposed in the present invention were placed downstream of the second cooling heat exchanger, there would hardly be any temperature difference between the two sides of said third heat exchanger and the efficacy thereof would therefore be limited. It would not entail significant energy savings in said second cooling heat exchanger either.

According to an alternative embodiment of the proposed method, said preheating is performed by means of two consecutive preheating heat exchangers, both using the already sterilized liquid product as a heat source for preheating the liquid product to be sterilized.

Additionally, it is proposed for a step of homogenizing liquid product to be performed prior to sterilization thereof between said two preheating heat exchangers. Said step of homogenizing is performed both in the entry phase of the product to be sterilized, wherein it can be optional, and after sterilization, on the outgoing liquid product.

Furthermore, the sterilization preferably, but in a non-limiting manner, consists of a UHT process in which temperatures greater than 135°C are achieved in a few seconds, killing any microorganism said liquid product may contain, preventing eventual bacterial growth or another type of growth that may contaminate or spoil said liquid product.

The subsequent passage of the already sterilized liquid product through successive heat exchangers again allows rapidly and continuously reducing the temperature thereof, returning the liquid product to room temperature or to a lower temperature, preventing prolonged exposure to high temperatures from changing, as little as possible, the organoleptic properties of the liquid product or from destroying some of its nutrients.

According to an optional embodiment of the proposed method, said UHT sterilization process is a direct process involving a step of contacting the heating fluid (water vapor) with the liquid to be sterilized followed by a step of controlled rapid evaporation.

Typically, said contact will be brought about by injecting vapor in the liquid product or projecting it against same. Said vapor will condense adding water content to the liquid product which must subsequently be evaporated to re-establish the initial conditions of the liquid product.

It is also contemplated that sterilization of the liquid product by means of heating is obtained by means of a mixed UHT sterilization method, i.e., a method which combines partially heating said liquid product by putting it in contact with the heating fluid, and simultaneously transferring heat thereto without direct contact.

Other heat sterilization methods can be implemented in the present method without it affecting the principle of the invention, also including change in pressure, or heating using other means. It is particularly contemplated that heating is applied by means of high-frequency waves (microwaves or radiofrequency waves) which convert into heat when in contact with the liquid.

According to another proposed embodiment, said liquid product is a drinkable liquid food product incorporating water having dissolved therein one or more components selected from soy, barley or a grain or seed of a herbaceous plant having edible seeds. In any case, the product to be treated must have a specific viscosity making the circulation thereof along the conduits of the circuit possible.

It is alternatively proposed for said liquid product to be a dairy product.

### Brief Description of the Drawings

The foregoing and other advantages and features will be better understood based on the following detailed description of an embodiment in reference to the attached drawings which must be considered in an illustrative and non-limiting manner, in which:

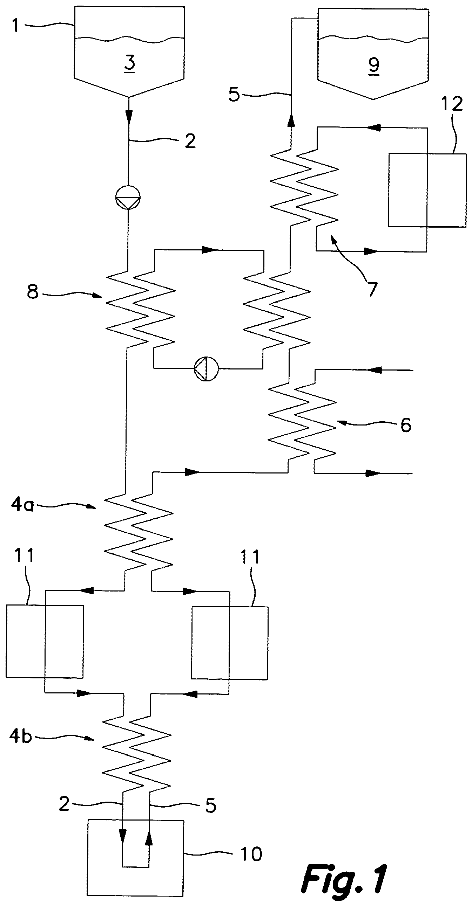

Figure 1 shows a simplified diagram of a plant implementing the proposed method.

### Detailed Description of an Embodiment

Figure 1 shows, in an illustrative and non-limiting manner, a simplified diagram of the operation of a plant implementing a method for continuously sterilizing a liquid product comprising the following steps:
A liquid product 3 to be sterilized, preferably an edible liquid product, such as for example, milk, milk derivative or expressed juice or a beverage made from plant-based foods, that need to be kept for a long time, is first stored in a storage tank 1.

Since said liquid product 3 is not sterilized, said storage preferably takes place in cold but not frozen conditions, such as for example, temperatures between 0° and 6°C. In the present embodiment, the temperature will be 5°C.

Said liquid product 3 to be sterilized is extracted from said storage tank 1 constantly by means of a pump and channeled through a supply conduit 2.

Said channeled liquid product 3 to be sterilized is then conducted to a third cooling heat exchanger 8 putting said refrigerated liquid product 3 to be sterilized in thermal contact with an already sterilized liquid product 9 that still keeps part of the heat energy that has been injected thereto during the sterilization process. Said third cooling heat exchanger 8 thus causes cooling of the already sterilized liquid product 9, while at the same time causes a first heating of the liquid product 3 to be sterilized. Said third cooling heat exchanger 8 can be direct or indirect, in this last case, by means of a closed sterilized water circuit as heat carrier, to prevent the risk of contact between the two products in the event of a leak.

The liquid product 3 to be sterilized is then conducted to a preheating area in which it goes consecutively through two preheating heat exchangers 4a and 4b which put said liquid product 3 to be sterilized in thermal contact with the already sterilized liquid product 9, thereby achieving the double function of preheating the liquid product 3 to be sterilized, while at the same time cooling the already sterilized liquid product 9, thus successfully recovering part of the energy of the system.

A homogenization unit can be intercalated between said two preheating heat exchangers 4a and 4b, passing said liquid product 3 to be sterilized therethrough.

The liquid product 3 to be sterilized, after passing through the preheating area and already having its temperature increased considerably, reaches a sterilization unit 10 in which its temperature is increased to sterilization temperatures, for example greater than 135°C and up to 150°C, and said liquid product is maintained at said sterilization temperature in said unit 10 for a holding time sufficient to assure correct sterilization.

Depending on the sterilization process used, the temperature reached and the holding time can differ, for example, according to whether the process is a UHT or HT process.

The way to increase the temperature of the liquid product 3 to be sterilized to sterilization temperatures can also differ. In the described example, said increase in temperature is achieved by means of indirect heating, i.e., by means of heat exchange without direct contact between the liquid product and the heat carrying liquid, i.e., for example by means of a heat exchanger putting the liquid product in thermal contact with vapor, or with a high temperature oil.

It is also contemplated that said sterilization heating occurs directly, i.e., putting the liquid product in direct contact with the vapor carrying fluid, which must be suitable for human consumption, causing the mixing thereof. Typically, said contact will be brought about by injecting high temperature vapor in the liquid product, which causes condensation of said vapor and mixing of the condensed water with the liquid product, that will subsequently be subjected to a process for evaporating said added water in order to recover the original water content prior to sterilization, as well as to eliminate any unwanted aroma or taste. This process can also be combined with a pressure control, rapidly increasing or decreasing the temperature of the liquid product, making sterilization more effective.

The already sterilized liquid product 9, after passage thereof through the sterilization unit 10, must then be rapidly cooled to prevent the prolonged high temperature from damaging its taste or nutritional properties. To that end, said liquid product is successively conducted through the two preheating heat exchangers 4b and 4a, where it will give off part of its heat for preheating the incoming liquid product 3 to be sterilized. There is located between said two exchangers a homogenization unit 11, optional at the inlet and compulsory at the outlet, for the already sterilized product 9.

The already sterilized liquid product 9 is then cooled by means of a first cooling heat exchanger 6 in which it is put in thermal contact with water at room temperature, for example, water which is cooled in a tower in a conventional manner.

At said point, the already sterilized liquid product 9 still keeps part of its heat, since it will be slightly above room temperature, so additional cooling processes are required, particularly if said already sterilized liquid product 9 is to be stored at refrigerated temperatures above the freezing temperature but below room temperature, so heat exchange with water at room temperature is not sufficient to reach said refrigerated temperature.

Cooling the already sterilized liquid product 9 from the current temperature above room temperature to the storage temperature involves costly energy investment. For that reason, it is proposed to put the already sterilized liquid product 9, which is at a temperature above room temperature, in thermal contact with the refrigerated liquid product 3 to be sterilized by means of the third cooling heat exchanger 8, reducing the temperature of the already sterilized liquid product below room temperature without any energy cost, while at the same time heating the refrigerated liquid product 3 to be sterilized, thereby achieving double savings, since as the temperature of the already sterilized liquid product 9 has been reduced below room temperature, the energy cost of the cooling produced in the second cooling heat exchanger 7 powered by the cooling unit 12 is lower, given that the energy that must be extracted is also less.

## Claims

1. A method for continuously sterilizing a liquid product (3) comprising the following steps:
a) extracting said liquid product from a storage tank (1) at a first temperature and supplying same under pressure through a supply conduit (2); and heating the incoming liquid product to be sterilized putting said liquid product in contact with the already sterilized liquid through a first heat exchanger;
b) preheating said liquid product (3) in a preheating area by means of at least one preheating heat exchanger (4a) in contact with a liquid at a second temperature greater than said first temperature;
c) sterilizing said preheated liquid product (3) reaching a sterilization temperature and maintaining same for a predetermined holding time;
d) cooling the sterilized liquid product in a discharge conduit (5) by means of passage thereof through the mentioned at least one preheating heat exchanger (4a), and by a third cooling heat exchanger (8) wherein an exchange between the liquid product (3) to be sterilized freshly extracted from said storage tank (1) and the discharged sterilized product is performed; and by the subsequent passage thereof through a second cooling heat exchanger (7) in thermal contact with water cooled below room temperature,
**characterized in that**
said step of cooling further comprises cooling the sterilized liquid product by passage thereof through a first cooling heat exchanger (6) in thermal contact with water at room temperature previous to the third cooling heat exchanger (8), which is intercalated between said two cooling heat exchangers (6, 7) in thermal contact with water at room temperature and with cooled water; and wherein
the first heat exchanger heating the incoming liquid product puts said incoming liquid product in contact with the already sterilized liquid product which has been cooled to a temperature close to room temperature, after passing through the preheating heat exchanger/exchangers (4a) and through the first cooling heat exchanger (6).

2. The method according to claim 1, wherein said preheating is performed by means of two preheating heat exchangers (4a, 4b).

3. The method according to claim 1, wherein at least one step of homogenizing liquid product is performed between said two preheating heat exchangers (4a, 4b).

4. The method according to any one of the preceding claims, wherein said sterilization consists of a UHT process in which temperatures up to 150°C are reached.

5. The method according to claim 4, wherein said UHT sterilization process is an indirect process, without contact of the heating fluid with the liquid to be sterilized.

6. The method according to claim 4, wherein said UHT sterilization process is a direct process, involving a step of contacting the heating fluid with the liquid to be sterilized followed by a step of controlled rapid evaporation.

7. The method according to claim 4, wherein said UHT sterilization process is a mixed process.

8. The method according to claim 4, **characterized in that** said sterilization process is performed through energy application by means of high-frequency waves.

9. The method according to any one of the preceding claims, wherein said liquid product is a drinkable liquid food product incorporating water having dissolved therein one or more components selected from soy, barley or a grain or seed of a herbaceous plant having edible seeds.

10. The method according to any one of the preceding claims, wherein said liquid product is a dairy product.

## Patentansprüche

1. Verfahren zur kontinuierlichen Sterilisation eines flüssigen Produkts (3), welches folgende Schritte umfasst:
a) das Entnehmen des genannten flüssigen Produkts aus einem Speicherbehälter (1) bei einer ersten Temperatur und das Zuführen desselben unter Druck durch eine Zuführleitung (2); und das Aufheizen des eintretenden zu sterilisierenden flüssigen Produkts, indem das genannte flüssige Produkt in Kontakt mit der bereits sterilisierten Flüssigkeit über einen ersten Wärmetauscher gebracht wird;
b) das Vorheizen des genannten flüssigen Produkts (3) in einem Vorheizbereich mittels mindestens eines vorheizenden Wärmetauschers (4a) in Kontakt mit einer Flüssigkeit bei einer zweiten Temperatur, welche höher als die genannte erste Temperatur ist;
c) das Sterilisieren des genannten vorgeheizten flüssigen Produkts (3), indem eine Sterilisierungstemperatur erreicht wird und diese eine vorbestimmte Haltezeit lang aufrechterhalten wird;
d) das Kühlen des sterilisierten flüssigen Produkts in einer Abführleitung (5) mittels des Durchgangs desselben durch den erwähnten mindestens einen vorheizenden Wärmetauscher (4a), und durch einen dritten kühlenden Wärmetauscher (8), wobei ein Austausch zwischen dem zu sterilisierenden flüssigen Produkt (3), welches frisch aus dem genannten Speicherbehälter (1) entnommen worden ist, und dem abgeführten sterilisierten Produkt durchgeführt wird; und mittels des nachfolgenden Durchgangs desselben durch einen zweiten kühlenden Wärmetauscher (7) in thermischem Kontakt mit unter Raumtemperatur gekühltem Wasser,
**dadurch gekennzeichnet, dass**
der genannte Schritt des Kühlens zusätzlich das Kühlen des sterilisierten flüssigen Produkts durch den Durchgang desselben durch einen ersten kühlenden Wärmetauscher (6) in thermischem Kontakt mit Wasser bei Raumtemperatur vor dem dritten kühlenden Wärmetauscher (8), welcher zwischen den genannten zwei kühlenden Wärmetauschern (6, 7) in thermischem Kontakt mit Wasser bei Raumtemperatur und mit gekühltem Wasser eingefügt ist, umfasst;
und wobei
der erste Wärmetauscher, welcher das eintretende flüssige Produkt aufheizt, das genannte eintretende flüssige Produkt in Kontakt mit dem bereits sterilisierten flüssigen Produkt bringt, welches bis zu einer Temperatur nah an der Raumtemperatur gekühlt worden ist, nachdem es durch den/die vorheizenden Wärmetauscher (4a) und durch den ersten kühlenden Wärmetauscher (6) durchgegangen ist.

2. Verfahren nach Anspruch 1, wobei das genannte Vorheizen mittels zweier vorheizenden Wärmetauscher (4a, 4b) durchgeführt wird.

3. Verfahren nach Anspruch 1, wobei mindestens ein Schritt des Homogenisierens des flüssigen Produkts zwischen den genannten zwei vorheizenden Wärmetauschern (4a, 4b) durchgeführt wird.

4. Verfahren nach einem der vorhergehenden Ansprüche, wobei die genannte Sterilisierung aus einem UHT-Prozess besteht, in welchem Temperaturen bis zu 150ºC erreicht werden.

5. Verfahren nach Anspruch 4, wobei der genannte UHT-Sterilisierungsprozess ein indirekter Prozess ist, ohne Kontakt des aufheizenden Fluids mit der zu sterilisierenden Flüssigkeit.

6. Verfahren nach Anspruch 4, wobei der genannte UHT-Sterilisierungsprozess ein direkter Prozess ist, welcher einen Schritt des Kontaktierens des aufheizenden Fluids mit der zu sterilisierenden Flüssigkeit, gefolgt von einem Schritt der gesteuerten schnellen Verdampfung beinhaltet.

7. Verfahren nach Anspruch 4, wobei der genannte UHT-Sterilisierungsprozess ein gemischter Prozess ist.

8. Verfahren nach Anspruch 4, **dadurch gekennzeichnet, dass** der genannte Sterilisierungsprozess durch Anwendung von Energie mittels Hochfrequenzwellen durchgeführt wird.

9. Verfahren nach einem der vorhergehenden Ansprüche, wobei das genannte flüssige Produkt ein trinkbares flüssiges Lebensmittel ist, welches Wasser enthält, das einen oder mehrere Bestandteile darin aufgelöst aufweist, ausgewählt aus Soja, Gerste oder ein Korn oder einen Samen aus einer krautigen Pflanze, welche essbare Samen hat.

10. Verfahren nach einem der vorhergehenden Ansprüche, wobei das genannte flüssige Produkt ein Milchprodukt ist.

## Revendications

1. Une méthode pour la stérilisation continue d'un produit liquide (3) comportant les étapes suivantes :
a) l'extraction de ce produit liquide d'un réservoir de stockage (1) à une première température et son alimentation sous pression à travers un conduit d'alimentation (2) ; et le chauffage du produit liquide entrant à stériliser en mettant ce produit liquide en contact avec le liquide déjà stérilisé à travers un premier échangeur de chaleur ;
b) le préchauffage de ce produit liquide (3) dans une région de préchauffage au moyen d'au moins un échangeur de chaleur de préchauffage (4a) en contact avec un liquide à une deuxième température plus élevée que cette première température ;
c) la stérilisation de ce produit liquide préchauffé (3) en arrivant à une température de stérilisation et en la maintenant durant un temps de maintien prédéterminé ;
d) le refroidissement du produit liquide stérilisé dans un conduit de décharge (5) au moyen de son passage à travers ledit au moins un échangeur de chaleur de préchauffage (4a) et par un troisième échangeur de chaleur de refroidissement (8) où un échange entre le produit liquide (3) à stériliser qui vient d'être extrait de ce réservoir de stockage (1) et le produit stérilisé déchargé a lieu ; et au moyen de son passage ensuite à travers un deuxième échangeur de chaleur de refroidissement (7) en contact thermique avec l'eau refroidie au-dessous de la température ambiante,
**caractérisée en ce que**
cette étape de refroidissement comporte en plus le refroidissement du produit liquide stérilisé au moyen de son passage à travers un premier échangeur de chaleur de refroidissement (6) en contact thermique avec l'eau à température ambiante avant le troisième échangeur de chaleur de refroidissement (8) qui est intercalé entre ces deux échangeurs de chaleur de refroidissement (6,7) en contact thermique avec l'eau à la température ambiante et avec l'eau refroidie ; et dans laquelle
le premier échangeur de chaleur chauffant le produit de liquide entrant met ce produit liquide entrant en contact avec le produit liquide déjà stérilisé qui a été refroidit à une température proche de la température ambiante, après avoir passé à travers l'échangeur/les échangeurs de chaleur de préchauffage (4a) et à travers le premier échangeur de chaleur de refroidissement (6).

2. La méthode conformément à la revendication 1, dans laquelle ce préchauffage est effectué au moyen de deux échangeurs de chaleur de préchauffage (4a, 4b).

3. La méthode conformément à la revendication 1, dans laquelle au moins une étape d'homogénéisation du produit liquide est effectuée entre ces deux échangeurs de chaleur de préchauffage (4a, 4b).

4. La méthode conformément à une quelconque des revendications précédentes, dans laquelle cette stérilisation consiste en un processus UHT dans lequel des températures de jusqu'à 150ºC sont atteintes.

5. La méthode conformément à la revendication 4, dans laquelle ce processus de stérilisation UHT est un processus indirect, sans contact du fluide chauffant avec le liquide à stériliser.

6. La méthode conformément à la revendication 4, dans laquelle ce processus de stérilisation UHT est un processus direct, comportant une étape de contact du fluide chauffant avec le liquide à stériliser suivie d'une étape d'évaporation rapide contrôlée.

7. La méthode conformément à la revendication 4, dans laquelle ce processus de stérilisation UHT est un processus mixte.

8. La méthode conformément à la revendication 4, dans laquelle ce processus de stérilisation est effectuée à travers l'application d'énergie au moyen d'ondes de haute fréquence.

9. La méthode conformément à une quelconque des revendications précédentes dans laquelle ce produit liquide est une denrée alimentaire liquide buvable incorporant de l'eau dans laquelle ont été dissous un ou plusieurs composants sélectionnés tels que soja, orge ou graine ou semence d'une plante herbacée ayant des semences comestibles.

10. La méthode conformément aux revendications précédentes dans laquelle ce produit liquide est un produit laitier.
